# EUROPEAN PATENT APPLICATION

(11) **EP 4 817 733 A1**
(43) Date of publication of application: **07.10.2026**
(21) Application number: 24897572.4
(22) Date of filing: 27.11.2024
(51) Int. Cl.: B01J 20/20, B01J 20/28, B01J 20/30, C01B 32/05, C01B 32/312, C02F 1/28

(54) **CARBONACEOUS MATERIAL AND METHOD FOR PRODUCING SAME, SORPTION FILTER, WATER PURIFIER CARTRIDGE, WATER PURIFIER, AND WATER PURIFICATION FACILITY**

(30) Priority: 29.11.2023 JP 2023201658
(71) Applicant: Osaka Gas Chemicals Co., Ltd., Osaka-shi, Osaka 550-0023 (JP)
(72) Inventor: CHISHIRO, Takefumi, Osaka-shi, Osaka 550-0023 (JP); SEIKE, Naoya, Osaka-shi, Osaka 550-0023 (JP); KOBAYASHI, Aya, Osaka-shi, Osaka 550-0023 (JP); FUJII, Noriko, Osaka-shi, Osaka 550-0023 (JP); UEDA, Sakae, Osaka-shi, Osaka 550-0023 (JP); ASADA, Takuya, Osaka-shi, Osaka 550-0023 (JP)
(74) Representative: Marks & Clerk LLP
(86) International application number: PCT/JP2024/041933
(87) International publication number: WO 2025/115888

(57) **Abstract**

The present invention provides a carbonaceous material having an iodine number of 1,300 mg/g or more and 1,800 mg/g or less, a Reactive Black 5 value of 1.0 g/L or more and 6.0 g/L or less, and a specific surface area of 1,100 m²/g or more and 1,700 m²/g or less determined by the BET method from a N² adsorption isotherm at -196°C.

## Description

### TECHNICAL FIELD

The present invention relates to a carbonaceous material, a method for producing the same, an adsorption filter, a water purifier cartridge, a water purifier, and a water purification facility.

### BACKGROUND ART

Household water purifiers are widely used for removing harmful substances in tap water. Among such harmful substances, chlorine residual is designated as one of removal target substances under the Household Goods Quality Labeling Act for the household water purifiers, and is desired to be removed from the tap water.

A household water purifier generally uses activated carbon or metal sulfite to remove free residual chlorine. For example, Patent Document 1 describes activated carbon having a large number of small pores with a pore size of 0.679 nm or more and 0.733 nm or less, and describes that the activated carbon having such a pore size has an improved ability to capture free residual chlorine in the pores. Patent Document 2 describes a remover for free residual chlorine containing a metal suboxide.

### CITATION LIST

### PATENT DOCUMENTS

Patent Document 1: Japanese Unexamined Patent Publication No. 2020-157242
Patent Document 2: Japanese Unexamined Patent Publication No. 2004-113869

### SUMMARY OF THE INVENTION

### TECHNICAL PROBLEM

In recent years, there is a growing demand for the household water purifier with a small water purifier body and the activated carbon with high removal performance. In particular, Japanese Industrial Standards (JIS) S 3201 specifying testing methods for household water purifiers were revised in 2019, and five new substances were added as removal target substances in the revised version JIS S 3201: 2019. Thus, the household water purifiers that remove more kinds of harmful substances than ever before are needed.

According to Patent Document 1, the activated carbon with high removal performance for free residual chlorine is obtained by setting the pore size within a predetermined range to control micropores, but no control has been made on large pores. Thus, the activated carbon does not have high adsorption performance for relatively large organic substances such as anionic surfactants and others that are newly added as the removal target substances, and cannot remove many kinds of harmful substances.

In addition, the remover of Patent Document 2 has high removal performance for free residual chlorine by using the reduction action exhibited by metal sulfites, but the remover has no pores. Thus, the remover does not have adsorption performance for the anionic surfactants, and cannot remove many kinds of harmful substances.

The present invention has been made in view of such problems, and is aimed to provide a carbonaceous material having removal performance for free residual chlorine that can be decomposed on a surface of the carbonaceous material and anionic surfactants having relatively large molecular sizes both at a high level, a method for producing the carbonaceous material, an adsorption filter, a water purifier cartridge, a water purifier, and a water purification facility.

### SOLUTION TO THE PROBLEM

As a result of intensive studies to accomplish the aim described above, the inventors have found that a carbonaceous material having an iodine number, a Reactive Black 5 value, and a specific surface area each in a specific range can have removal performance for free residual chlorine that can be decomposed on the surface of the carbonaceous material and removal performance for anionic surfactants having relatively large molecular sizes both at a high level, and have achieved the present invention.

The present invention includes the following embodiments.
[1] A carbonaceous material having an iodine number of 1,300 mg/g or more and 1,800 mg/g or less, a Reactive Black 5 value of 1.0 g/L or more and 6.0 g/L or less, and a specific surface area of 1,100 m²/g or more and 1,700 m²/g or less determined by the BET method from a N₂ adsorption isotherm at -196°C.
[2] The carbonaceous material of [1], wherein a ratio (A/B) of a pore volume (A) of pores with a pore size of 1.00 nm or less per g of the carbonaceous material calculated by the QSDFT method from a nitrogen adsorption isotherm to a pore volume (B) of mesopores determined by the BJH method from the N₂ adsorption isotherm at -196°C is 1.0 or more and 4.0 or less.
[3] The carbonaceous material of [1], wherein a percentage of mesopores is 4.8% or more and 15.0% or less.
[4] The carbonaceous material of [1], wherein a pore volume of mesopores determined by the BJH method from the N₂ adsorption isotherm at -196°C is 0.06 cm³/g or more and 0.30 cm³/g or less.
[5] The carbonaceous material of [1], wherein a total pore volume determined by the BJH method from the N₂ adsorption isotherm at -196°C is 0.25 cm³/g or more and 1.00 cm³/g or less.
[6] The carbonaceous material of [1], wherein a tapped bulk density measured by the tapping method is 0.30 g/mL or more and 0.50 g/mL or less.
[7] The carbonaceous material of any one of [1] to [6], wherein the carbonaceous material is used for removing at least free residual chlorine and an anionic surfactant in water.
[8] A method for producing the carbonaceous material of any one of [1] to [6], the method including: carbonizing a raw material to obtain a carbonized material; and subjecting the carbonized material to an activation treatment to obtain an activated product.
[9] The method of [8], further including washing the activated product.
[10] The method of [8], wherein the raw material is coconut shells.
[11] An adsorption filter including: the carbonaceous material of any one of [1] to [6].
[12] A water purifier cartridge including: the carbonaceous material of any one of [1] to [6].
[13] A water purifier including: the carbonaceous material of any one of [1] to [6].
[14] A water purification facility including: the carbonaceous material of any one of [1] to [6].

### ADVANTAGES OF THE INVENTION

The present invention can provide a carbonaceous material that exhibits removal performance for free residual chlorine that can be decomposed on a surface of the carbonaceous material and removal performance for anionic surfactants having relatively large molecular sizes both at a high level, a method for producing the carbonaceous material, an adsorption filter, a water purifier cartridge, a water purifier, and a water purification facility.

### BRIEF DESCRIPTION OF THE DRAWINGS

[FIG. 1] In FIG. 1, I is a schematic cross-sectional view of a rotary kiln, and II is a schematic side view of the rotary kiln.
[FIG. 2] FIG. 2 is a schematic cross-sectional view for explaining the rotary kiln.

### DESCRIPTION OF EMBODIMENTS

An embodiment of the present invention (hereinafter simply referred to as "the present embodiment") will be described in detail below. The present embodiment described below is an example for explaining the present invention, and the present invention is not limited to the present embodiment.

According to the classification standards of International Union of Pure and Applied Chemistry (IUPAC), the pores of a carbonaceous material described in the present specification are classified into micropores having a pore size below 2.0 nm, mesopores having a pore size of 2.0 nm or more and 50.0 nm or less, and macropores having a pore size larger than 50.0 nm. The mesopores are effective for adsorbing anionic surfactants having relatively large molecular sizes.

### [Carbonaceous Material]

The carbonaceous material of the present embodiment has an iodine number of 1,300 mg/g or more and 1,800 mg/g or less, a Reactive Black 5 value of 1.0 g/L or more and 6.0 g/L or less, and a specific surface area of 1,100 m²/g or more and 1,700 m²/g or less determined by the BET method from a N₂ adsorption isotherm at -196°C.

The carbonaceous material that satisfies such requirements can have removal performance for free residual chlorine that can be decomposed on the surface of the carbonaceous material and removal performance for the anionic surfactants having relatively large molecular sizes both at a high level. Specifically, the carbonaceous material has a surface area per unit mass controlled to be suitable for free residual chlorine that can be decomposed on the surface of the carbonaceous material, and thus can exhibit high removal performance for free residual chlorine. In addition, the carbonaceous material has a pore size controlled to be suitable for the anionic surfactants having relatively large molecular sizes, and thus can exhibit high adsorption performance for the anionic surfactants.

Examples of the anionic surfactants include alkyl sulfonates such as sodium linear-dodecylbenzenesulfonate. The carbonaceous material of the present embodiment can suitably adsorb one or more of these anionic surfactants.

The iodine number of the carbonaceous material is 1,300 mg/g or more and 1,800 mg/g or less.

The iodine number is an index of the surface area of the pores of the carbonaceous material capable of physically adsorbing the anionic surfactants having relatively large molecular sizes. When the iodine number of the carbonaceous material is within the above range, the carbonaceous material exhibits high adsorption performance particularly for the anionic surfactants while maintaining the removal performance for free residual chlorine. When the iodine number of the carbonaceous material is 1,300 mg/g or more, the carbonaceous material can have a sufficiently large pore volume, remarkably improving the adsorption performance for the anionic surfactants. When the iodine number of the carbonaceous material is 1,800 mg/g or less, the pores of the carbonaceous material are not excessively large, allowing easy control of the pores adsorbing the anionic surfactants.

The iodine number is measured and calculated in accordance with JIS K 1474 (2014). The specific method for measuring and calculating the iodine number is described in Examples.

The iodine number is preferably 1,310 mg/g or more and 1,700 mg/g or less, more preferably 1,330 mg/g or more and 1,650 mg/g or less. The iodine number within the above range tends to provide a carbonaceous material having higher adsorption performance particularly for the anionic surfactants while maintaining the removal performance for free residual chlorine.

The Reactive Black 5 value of the carbonaceous material is 1.0 g/L or more and 6.0 g/L or less. Reactive Black 5 is a dye represented by the following formula (1), and is also referred to as C.I. Reactive Black-5.

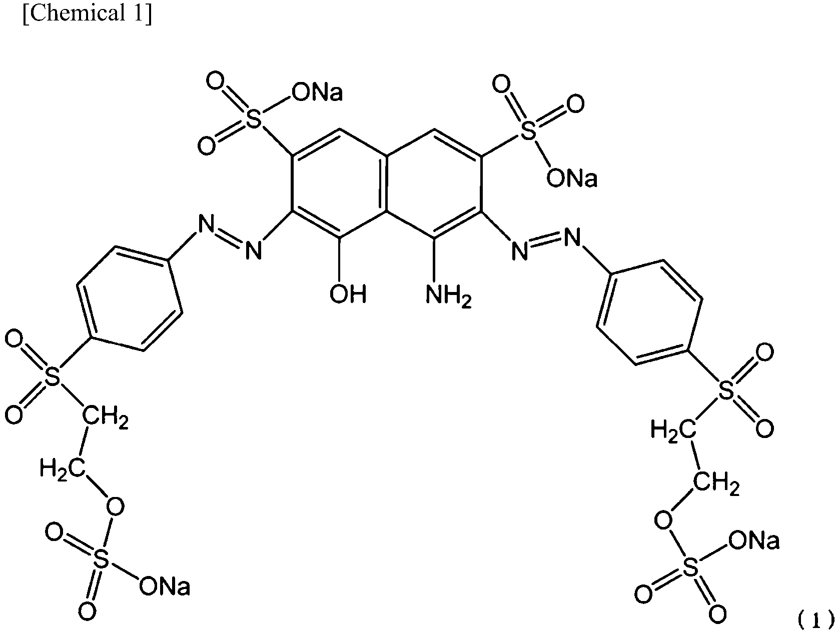

Reactive Black 5 has a large molecular weight of 995.88 and a bulky structure, and thus, the Reactive Black 5 value is used as an index of the adsorption characteristics for the anionic surfactants and the like having relatively large molecular sizes. The Reactive Black 5 value within the above range allows the carbonaceous material to exhibit high adsorption performance particularly for the anionic surfactants while maintaining the removal performance for free residual chlorine. When the Reactive Black 5 value is 1.0 g/L or more, the cumulative pore volume of large pores of the carbonaceous material is not excessively large, and the carbonaceous material can suitably maintain the pore volume effective for adsorbing the anionic surfactants having relatively large molecular sizes while maintaining the removal performance for free residual chlorine. When the Reactive Black 5 value is 6.0 g/L or less, the carbonaceous material can have a sufficient number of pores suitable for adsorbing the anionic surfactants having relatively large molecular sizes among the pores of the carbonaceous material. This can remarkably improve the adsorption performance for the anionic surfactants and the like.

The Reactive Black 5 value can be calculated, for example, as follows. Specifically, first, a test solution containing Reactive Black 5 and a residual solution obtained by mixing the carbonaceous material with the test solution to cause the carbonaceous material to sufficiently adsorb Reactive Black 5 and removing the carbonaceous material that adsorbed Reactive Black 5 are prepared, and the absorbance of each solution is measured with an ultraviolet and visible spectrophotometer at a wavelength of 594 nm and an optical path length (cell length) of 10 mm. Then, the residual ratio (%) of Reactive Black 5 contained in the residual solution and the adsorption amount (/g) of Reactive Black 5 per g of the carbonaceous material are calculated using the absorbances. Using these values, the Reactive Black 5 value (g/L) is calculated as the amount of the carbonaceous material required to remove 99% of Reactive Black 5 in a 1 L test solution. For the measurement of the Reactive Black 5 value, it is preferable to use a carbonaceous material having a 50% particle size (D50) in a volume-based cumulative distribution controlled to 9.0 µm or more and 11.0 µm or less. In the present specification, the 50% particle size (D50) refers to a value measured as a volume-based median particle size using a laser diffraction particle size analyzer. The specific method for measuring and calculating the Reactive Black 5 value is described in Examples.

The Reactive Black 5 value is preferably 1.5 g/L or more and 5.5 g/L or less, more preferably 1.7 g/L or more and 4.5 g/L or less, and much more preferably 2.0 g/L or more and 4.0 g/L or less. The Reactive Black 5 value within the above range tends to provide a carbonaceous material having higher adsorption performance particularly for the anionic surfactants while maintaining the removal performance for free residual chlorine.

The carbonaceous material has a specific surface area of 1,100 m²/g or more and 1,700 m²/g or less determined by the BET method from the N₂ adsorption isotherm at -196°C (hereinafter, also simply referred to as a "BET specific surface area"). The BET specific surface area is a surface area per unit mass of the carbonaceous material, and is an index of a surface area capable of decomposing free residual chlorine. The BET specific surface area within the above range allows the carbonaceous material to exhibit high removal performance particularly for free residual chlorine while maintaining the adsorption performance for the anionic surfactants. When the BET specific surface area is 1,100 m²/g or more, the carbonaceous material can have a sufficient specific surface area. Thus, the carbonaceous material can exhibit high removal performance for free residual chlorine, significantly improving the removal performance for free residual chlorine. When the BET specific surface area is 1,700 m²/g or less, the specific surface area of the carbonaceous material is not excessively large, and thus, the carbonaceous material can have a suitable pore volume. Further, a suitable carbonaceous material can be obtained without reducing the amount of carbon constituting the carbon skeleton. Thus, the carbonaceous material is hardly destroyed even in tap water, for example, and can exhibit high removal performance for free residual chlorine and the anionic surfactants. The specific method for measuring and calculating the BET specific surface area is described in Examples.

The BET specific surface area is preferably 1,250 m²/g or more and 1,690 m²/g or less, more preferably 1,300 m²/g or more and 1,680 m²/g or less, and much more preferably 1,400 m²/g or more and 1,670 m²/g or less. The BET specific surface area within the above range tends to provide a carbonaceous material having higher removal performance particularly for free residual chlorine while maintaining the adsorption performance for the anionic surfactants.

In the carbonaceous material, the ratio (A/B ratio, hereinafter also simply referred to as a "mesopore ratio") of a pore volume (A) of pores with a pore size with a pore size of 1.00 nm or less per g of the carbonaceous material calculated by the QSDFT method from a nitrogen adsorption isotherm (hereinafter also simply referred to as the "pore volume of the pores of 1.00 nm or less") to a pore volume (B) of mesopores determined by the BJH method from the N₂ adsorption isotherm at -196°C (hereinafter also simply referred to as the "mesopore volume") is preferably 1.0 or more and 4.0 or less, more preferably 1.3 or more and 3.5 or less, and further preferably 1.5 or more and 3.0 or less. The mesopore ratio within the above range tends to provide a carbonaceous material having higher removal performance particularly for free residual chlorine while maintaining the adsorption performance for the anionic surfactants.

The mesopore ratio is an index of the percentage of pores effective for the removal of free residual chlorine. When the mesopore ratio is 1.0 or more, the carbonaceous material has a sufficient number of pores with a pore size effective for the removal of free residual chlorine, and tends to exhibit higher removal performance. When the mesopore ratio is 4.0 or less, the percentage of pores that are too large and unsuitable for removing free residual chlorine is small, and voids in the carbonaceous material are not excessively large, keeping the amount of carbon constituting the carbon skeleton from decreasing. Thus, the carbonaceous material tends to exhibit higher removal performance.

The specific method for measuring and calculating the mesopore ratio is described in Examples.

The percentage of mesopores in the carbonaceous material is preferably 4.8% or more and 15.0% or less, more preferably 5.0% or more and 13.0% or less, and much more preferably 6.0% or more and 12.0% or less. The percentage of mesopores within the above range tends to provide a carbonaceous material having higher adsorption performance particularly for the anionic surfactants while maintaining the removal performance for free residual chlorine.

In the present specification, the percentage of mesopores in the carbonaceous material is determined as the ratio of the specific surface area determined by the BJH method from the N₂ adsorption isotherm at -196°C (hereinafter also simply referred to as the "BJH specific surface area") to the specific surface area determined by the BET method from the N₂ adsorption isotherm at -196°C (i.e., the BET specific surface area). The mesopores are relatively large pores among the pores of the carbonaceous material contributing to the adsorption. Thus, the higher percentage of the mesopores indicates the higher adsorption performance for the anionic surfactants having relatively large molecular sizes. The specific method for measuring and calculating the percentage of the mesopores is described in Examples.

When the percentage of mesopores is 4.8% or more, the percentage of pores effective for the anionic surfactants having relatively large molecular sizes can be sufficient. Thus, the carbonaceous material maintains the removal performance for free residual chlorine, and in particular, remarkably improves the removal performance for the anionic surfactants. When the percentage of mesopores in the carbonaceous material is 15.0% or less, the pores of the carbonaceous material are not excessively large, and the pores adsorbing the anionic surfactants are easily controlled with the removal performance for free residual chlorine maintained.

In the carbonaceous material, the pore volume of mesopores determined by the BJH method from the N₂ adsorption isotherm at -196°C (hereinafter also simply referred to as the "mesopore volume") is preferably 0.06 cm³/g or more and 0.30 cm³/g or less, more preferably 0.10 cm³/g or more and 0.25 cm³/g or less, and much more preferably 0.12 cm³/g or more and 0.22 cm³/g or less. The mesopore volume within the above range tends to provide a carbonaceous material having higher adsorption performance particularly for the anionic surfactants while maintaining the removal performance for free residual chlorine.

When the mesopore volume is 0.06 cm³/g or more, the carbonaceous material can have a lot of relatively large pores that are particularly effective for the anionic surfactants. Thus, the carbonaceous material maintains the removal performance for free residual chlorine, and in particular, tends to have high adsorption performance for the anionic surfactants. When the mesopore volume is 0.30 cm³/g or less, the pores of the carbonaceous material do are not excessively large, and the carbonaceous material can have many pores effective for adsorption of the anionic surfactants. Thus, the carbonaceous material maintains the removal performance for free residual chlorine, and in particular, tends to have high adsorption performance for the anionic surfactants. The specific method for measuring and calculating the mesopore volume is described in Examples.

In the carbonaceous material, the total volume of pores determined by the BJH method from the N₂ adsorption isotherm at -196°C (hereinafter also simply referred to as the "total pore volume") is preferably 0.25 cm³/g or more and 1.00 cm³/g or less, more preferably 0.35 cm³/g or more and 0.90 cm³/g or less, and much more preferably 0.45 cm³/g or more and 0.85 cm³/g or less. The total pore volume within the above range tends to provide a carbonaceous material having higher adsorption performance particularly for the anionic surfactants while maintaining the removal performance for free residual chlorine. The total pore volume is calculated as a cumulative pore volume in the pore size range of 1.2 nm or more and 97.4 nm or less.

When the total pore volume is 0.25 cm³/g or more, the carbonaceous material tends to exhibit higher performance particularly for the anionic surfactants due to the sufficiently large pore volume. When the total pore volume is 1.00 cm³/g or less, the carbonaceous material tends to exhibit higher performance for the anionic surfactants because the pores of the carbonaceous material are not excessively large and the carbonaceous material can have many pores effective for adsorption of the anionic surfactants. The specific method for measuring and calculating the total pore volume is described in Examples.

In the carbonaceous material, a tapped bulk density measured by the tapping method (hereinafter also simply referred to as "tapped bulk density") is preferably 0.30 g/mL or more and 0.50 g/mL or less, more preferably 0.31 g/mL or more and 0.45 g/mL or less, and still more preferably 0.33 g/mL or more and 0.43 g/mL or less. The tapped bulk density within the above range tends to allow the carbonaceous material to exhibit the removal performance for free residual chlorine and the anionic surfactants at a higher level. When the tapped bulk density is 0.30 g/mL or more, the pores of the carbonaceous material are not excessively large, and the carbonaceous material can have many pores effective for free residual chlorine and the anionic surfactants. Thus, the carbonaceous material tends to have high removal performance for free residual chlorine and the anionic surfactants. When the tapped bulk density is 0.50 g/mL or less, the carbonaceous material tends to have a sufficient amount of pores contributing to physical adsorption. Thus, the carbonaceous material tends to have high removal performance for free residual chlorine and the anionic surfactants. The specific method for measuring and calculating the tapped bulk density is described in Examples.

The shape of the carbonaceous material varies depending on the application and is not particularly limited. The shape includes, for example, powdered, lumpy, crushed, spherical, cylindrical, ellipsoidal, distorted, elliptical, elliptical pyramidal, and rod shapes including polygonal columns such as triangular, square, pentagonal, and hexagonal columns, thread shapes, pellet shapes such as solid and hollow pellets, crushed shapes such as powdered shapes, substrates (sheets), woven fabric (cloths), fibrous shapes such as felt, and block shapes.

The carbonaceous material preferably has a shape that makes the carbonaceous material applicable to a known adsorption filter. The shape includes, for example, spherical, ellipsoidal, distorted, rod shapes, thread shapes, pellet shapes, crushed shapes such as powdered shapes, substrates (sheets), woven fabric (cloths), fibrous shapes, and block shapes. These shapes can be appropriately selected according to the specific application. Among them, the carbonaceous material is preferably crushed, more preferably powdered, due to high adsorption performance per unit volume. The powdered carbonaceous material may have any size, and the particle size may be appropriately adjusted according to the specific application.

In the present specification, the term "crushed" refers to particles of any shape that is not uniform and is usually angular. The term "powdered" refers to, for example, fine powder, powder, fine particles, and granular powder, and the 50% particle size (D50) in the volume-based cumulative distribution is generally 1 µm or more and 150 µm or less.

For example, when the carbonaceous material is used as an adsorption filter of a water purifier, the shape is preferably cylindrical or a substrate shape (sheet shape), although it varies depending on the application and is not particularly limited. The carbonaceous material having such a shape tends to be efficiently used as the adsorption filter of the water purifier.

The carbonaceous material is preferably activated carbon.

### [Method for Producing Carbonaceous Material]

The carbonaceous material of the present embodiment can be obtained by a known production method.

Examples of such a method include a thermal decomposition method, an activation method, a coating method, and a vapor deposition method. The activation method is preferably used as the production method. Use of these production methods tends to allow easier production of a carbonaceous material having an iodine number of 1,300 mg/g or more and 1,800 mg/g or less, a Reactive Black 5 value of 1.0 g/L or more and 6.0 g/L or less, and a specific surface area of 1,100 m²/g or more and 1,700 m²/g or less determined by the BET method from a N₂ adsorption isotherm at -196°C.

The method for producing the carbonaceous material of the present embodiment includes carbonizing a raw material to obtain a carbonized material and subjecting the carbonized material to an activation treatment to obtain an activated product. The method for producing the carbonaceous material of the present embodiment preferably includes washing the activated product.

### (Carbonization)

The method for producing a carbonaceous material includes carbonizing a raw material to obtain a carbonized material.

Any raw material can be used as long as it is a material from which a desired carbonaceous material can be obtained. Examples of the raw material include plant-based or fossil-based raw materials such as wood, wood flour, fruit shells such as coconut shells, seeds such as palm kernels, plum pits, and peach pits, by-products in pulp production, bagasse, blackstrap molasses, coal (such as peat, lignite, brown coal, and bituminous coal), anthracite, petroleum distillation residues, petroleum pitch, coke, and coal tar; various synthetic resins such as phenol resin, vinyl chloride resin, vinyl acetate resin, melamine resin, urea resin, resorcinol resin, celluloid, epoxy resin, polyurethane resin, polyester resin, acrylic resin, and polyamide resin; synthetic rubbers such as polybutylene, polybutadiene, and polychloroprene; other synthetic wood; and synthetic pulp. These raw materials may be used alone, or two or more of them may be used in combination at any ratio according to the required specifications.

The raw material is preferably a natural product, more preferably the coconut shells. Use of such raw material tends to allow easier production of a carbonaceous material having an iodine number of 1,300 mg/g or more and 1,800 mg/g or less, a Reactive Black 5 value of 1.0 g/L or more and 6.0 g/L or less, and a specific surface area of 1,100 m²/g or more and 1,700 m²/g or less as determined by the BET method from a N₂ adsorption isotherm at -196°C.

The raw material may contain additives or any other substances as necessary. The additives or any other substances may be added to the carbonized material as necessary.

Examples of such additives include water, coal tar, anhydrous tar, hard pitch, coal tar-based pitch, and petroleum-based pitch. The additives may be used alone, or two or more of them may be used in combination.

The additives are each blended in an amount of usually 1.0 part by mass or more and 50.0 parts by mass or less with respect to 100 parts by mass of the raw material or the carbonized material. The total amount of the additives is usually 1 part by mass or more and 100 parts by mass or less with respect to 100 parts by mass of the raw material or the carbonized material. When the raw material or the carbonized material is mixed with the additive, the oxygen amount of the raw material or the carbonized material may be controlled in advance within the range of 1.0 mass% or more and 20.0 mass% or less with respect to 100 mass% of the raw material or the carbonized material, as necessary. The oxygen amount can be controlled by, for example, mixing the raw material or the carbonized material with oxygen under heating at 150°C or more and 300°C or less.

The method for producing the carbonaceous material may include pulverizing or molding the raw material before carbonizing the raw material. Examples of this method include a method of pulverizing the raw material into a powder form with a known pulverizer before the carbonization, and then carbonizing the powdered material. Another method includes molding the raw material into pellets by a known technique before carbonizing the raw material, and then carbonizing the pellets.

When the raw material is powdered, the particle size of the powder (50% particle size in a volume-based cumulative distribution, D50) is preferably 1 µm or more and 150 µm or less.

The raw material may be carbonized by any method, for example, by heating the raw material to 300°C or higher and 900°C or lower, preferably 400°C or higher and 800°C or lower, under oxygen-free conditions.

The carbonization time can be appropriately set depending on the raw material and the facility for carbonization. The carbonization time is, for example, 15 minutes or more and 20 hours or less, preferably 30 minutes or more and 10 hours or less, and more preferably 60 minutes or more and 5 hours or less. The carbonization can be performed using a known production equipment such as a rotary kiln. The carbonization may be performed at a pressure reduced by evacuation or in a nitrogen atmosphere.

The method for producing the carbonaceous material may include pulverizing the carbonized material into a powder form with a known pulverizer. This tends to allow easier production of a carbonaceous material having an iodine number of 1,300 mg/g or more and 1,800 mg/g or less, a Reactive Black 5 value of 1.0 g/L or more and 6.0 g/L or less, and a specific surface area of 1,100 m²/g or more and 1,700 m²/g or less determined by the BET method from a N₂ adsorption isotherm at -196°C. The method for producing the carbonaceous material may include pulverizing the carbonized material into powder, kneading the powdered carbonized material with an additive as necessary by a known technique, and molding the kneaded product by a known technique.

When the carbonized material is powdered, the carbonized material preferably has a particle size (50% particle size in a volume-based cumulative distribution, D50) of 1 µm or more and 150 µm or less.

In the method for producing the carbonaceous material, the carbonized material, the powdered carbonized material, the kneaded product, or the kneaded powdered product may be molded into cylindrical pellets by a known technique. This tends to allow easier production of a carbonaceous material having an iodine number of 1,300 mg/g or more and 1,800 mg/g or less, a Reactive Black 5 value of 1.0 g/L or more and 6.0 g/L or less, and a specific surface area of 1,100 m²/g or more and 1,700 m²/g or less determined by the BET method from a N₂ adsorption isotherm at -196°C.

When the carbonized material is molded into the cylindrical pellets, the diameter of the cylindrical pellet is preferably 0.1 mm or more and 4.0 mm or less. The aspect ratio (diameter:height) of the cylindrical pellet is preferably 1:1 to 1:10.

The carbonization provides a carbonized material as the raw material.

The method for producing the carbonaceous material may include washing and/or drying the carbonized material after the carbonization. The conditions for these steps are not particularly limited, and known conditions can be employed. Reference may also be made to the washing and drying described below.

### (Activation)

The method for producing the carbonaceous material includes subjecting the carbonized material to an activation treatment to obtain an activated product.

Any known method can be used to perform the activation treatment.

For the activation treatment, known production equipment such as a rotary kiln, a fluidized bed furnace, and a SLEP furnace (vertical furnace) can be used. The activation treatment may be performed at a pressure reduced by evacuation or in a nitrogen atmosphere.

The activation treatment is preferably performed using the rotary kiln. When the rotary kiln is used, the activated product that had its mass reduced with the progress of the activation of the carbonized material is not scattered outside the kiln and can stay in the furnace of the kiln. Thus, the carbonized material can be activated more sufficiently, and the micropores and the mesopores are satisfactorily developed. This tends to provide an activated product with the proportions of these pores controlled within suitable ranges.

Use of the rotary kiln efficiently brings the carbonized material and activating gas into contact with each other. This tends to allow suitable production of a carbonaceous material having higher adsorption performance for free residual chlorine and the anionic surfactants.

When the activation treatment is performed using the rotary kiln, the carbonized material to be charged in the rotary kiln preferably has a particle size retained on a 70 mesh sieve (aperture size: 243 µm) and passing through a 2 mesh sieve (aperture size: 10.7 mm), more preferably a particle size retained on a 32 mesh sieve (aperture size: 490 µm) and passing through a 2 mesh sieve (aperture size: 10.7 mm), in accordance with JIS Z 8801-1:2019 specifying test sieves of metal wire cloth. When the particle size of the carbonized material is within the above range, the activated product that has its mass reduced with the progress of the activation of the carbonized material can remain in the kiln, allowing more effective activation. As the carbonized material, a carbonized material having a particle size adjusted by cutting a raw material into a desired size before the carbonization may be used, or a carbonized material having a particle size adjusted by crushing and classifying the carbonized material into a desired size may be used.

Examples of the method for the activation treatment include a gas activation method in which the carbonized material is gasified using an activating gas such as a water vapor gas, an oxygen gas, or a carbon dioxide gas, and a chemical activation method in which the carbonized material is activated using a chemical agent such as zinc chloride or phosphoric acid. The activation treatment is preferably performed by the gas activation method. Use of the activating gas for the gas activation tends to achieve a sufficiently high reaction rate and allow the control of the reaction rate without decreasing the production efficiency. This tends to allow easier production of a carbonaceous material with the developed micropores and mesopores. As a result, a carbonaceous material having higher performance for free residual chlorine and the anionic surfactants tends to be easily produced. An inert gas such as nitrogen may be used in combination with the activating gas.

The partial pressure of the activating gas is, for example, 10% or more and 100% or less, preferably 30% or more and 100% or less.

As the activating gas, it is preferable that one or more gas selected from the group consisting of the water vapor gas and the oxygen gas is used, and it is more preferable that both the water vapor gas and the oxygen gas are used.

The water vapor gas tends to achieve a sufficiently high reaction rate and allow the control of the reaction rate without decreasing the production efficiency. Use of the water vapor gas tends to allow easier production of a carbonaceous material with the developed micropores and mesopores without decreasing the production efficiency. This tends to allow suitable production of a carbonaceous material having higher adsorption performance for free residual chlorine and the anionic surfactants.

The activation reaction is usually an endothermic reaction, and thus, a certain amount or more of heat is required to allow the activation reaction to proceed more efficiently. The oxygen gas and the water vapor gas are preferably used together as the activating gases to maintain the heat. During the activation reaction, a volatile gas is generated and reacts with the oxygen gas to burn, keeping the amount of heat required for the activation. Examples of the volatile gas include combustible gases such as a hydrogen gas and a carbon monoxide gas generated by activating the carbonized material.

When the water vapor gas and the oxygen gas are used as the activating gases, the partial pressure of the water vapor gas is preferably more than 20.0 vol% and less than 40.0 vol%, more preferably 25.0 vol% or more and 35.0 vol% or less. The partial pressure of the oxygen gas is preferably more than 1.0 vol% and less than 5.0 vol%, more preferably 1.5 vol% or more and 3.5 vol% or less. Note that an inert gas such as nitrogen may be contained as another gas. In this case, the partial pressure of the inert gas is preferably more than 45.0 vol% and less than 89.0 vol%, more preferably 61.5 vol% or more and 73.5 vol% or less. The proportions within the above tends to allow easier production of a carbonaceous material having an iodine number of 1,300 mg/g or more and 1,800 mg/g or less, a Reactive Black 5 value of 1.0 g/L or more and 6.0 g/L or less, and a specific surface area of 1,100 m²/g or more and 1,700 m²/g or less determined by the BET method from a N₂ adsorption isotherm at -196°C.

When the water vapor gas and the oxygen gas are used as the activating gases, the flow rate of the water vapor gas and the oxygen gas is preferably 10 liters (L) or more and 300 liters (L) or less in total per minute.

The time for the activation treatment can be appropriately set depending on the conditions such as the type of the raw material, the activation temperature, and the production equipment. The activation time is, for example, 20 minutes or more and 48 hours or less, preferably 50 minutes or more and 36 hours or less, more preferably 100 minutes or more and 24 hours or less, much more preferably 150 minutes or more and 600 minutes or less, and still more preferably 240 minutes or more and 480 minutes or less. The activation time within the above ranges tends to allow easier production of a carbonaceous material having an iodine number of 1,300 mg/g or more and 1,800 mg/g or less, a Reactive Black 5 value of 1.0 g/L or more and 6.0 g/L or less, and a specific surface area of 1,100 m²/g or more and 1,700 m²/g or less determined by the BET method from a N₂ adsorption isotherm at -196°C.

The temperature at which the activation treatment is performed is not particularly limited, but is preferably 800°C or higher and 1,250°C or lower, more preferably 850°C or higher and 1,150°C or lower. Performing the activation treatment at such a temperature tends to allow easier production of a carbonaceous material having an iodine number of 1,300 mg/g or more and 1,800 mg/g or less, a Reactive Black 5 value of 1.0 g/L or more and 6.0 g/L or less, and a specific surface area of 1,100 m²/g or more and 1,700 m²/g or less determined by the BET method from a N₂ adsorption isotherm at -196°C.

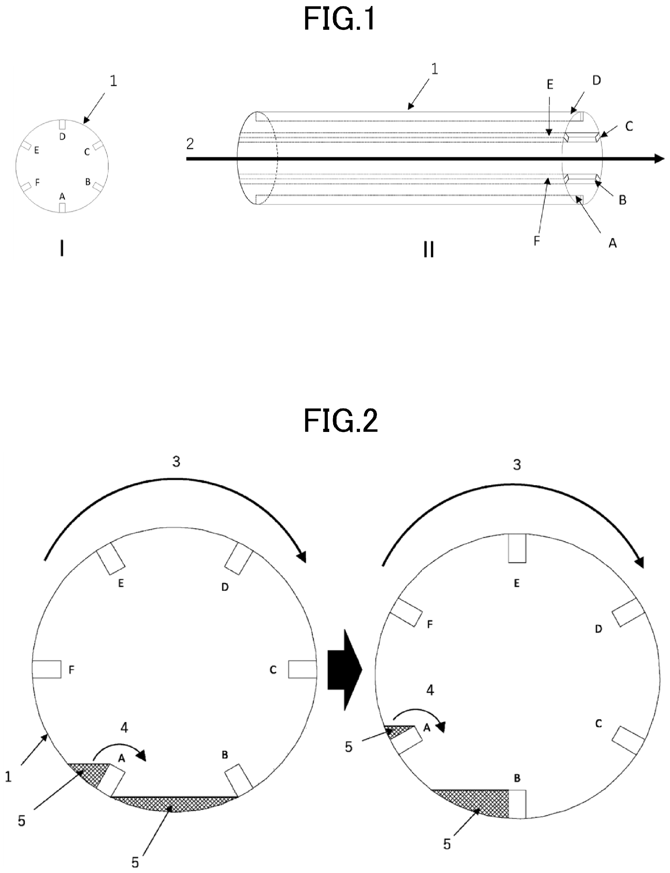

Examples of the activation apparatus for performing the activation treatment include a rotary kiln as shown in FIGS. 1 and 2. FIG. 1 shows a cross-sectional view I and a side view II of a rotary kiln. FIG. 2 is a schematic cross-sectional view illustrating the rotary kiln.

As shown in FIGS. 1 and 2, the rotary kiln usually includes a tube 1 and stirring blades A to F disposed on an inner wall surface of the tube 1. The activating gas is generally fed from one side to the other, that is, in a flow direction 2 of the activating gas in the tube 1 of the rotary kiln as shown in FIGS. 1 and 2.

The material of the tube 1 is not particularly limited as long as being the material used for the rotary kiln, and may be, for example, stainless steel.

FIGS. 1 and 2 show six stirring blades, but the number of stirring blades can be appropriately changed according to the amount of a carbonized material 5 as a raw material to be charged. The number of stirring blades is generally 1 or more and 20 or less, preferably 3 or more and 12 or less, more preferably 5 or more and 10 or less. The stirring blades are preferably arranged at regular intervals around the center axis of the tube 1. For example, when six stirring blades are used, the stirring blades are arranged at 60° intervals around the center axis of the tube 1.

The height of each stirring blade (the height in the direction from the wall surface of the tube 1 toward the center) can be appropriately set according to the size of the tube 1 and the amount of the carbonized material 5 charged, and is preferably set so that the stirring blade is visible without being covered with the carbonized material 5 charged into the tube 1. Specifically, the height of the stirring blade is preferably controlled so that the stirring blade at the bottom of the tube 1 (at the position of the stirring blade B in the right diagram of FIG. 2) is covered with the carbonized material 5 by 1/2 or more and 2/3 or less from the bottom. The height of the stirring blade is more preferably 10% or more and 30% or less with respect to the inner radius of the tube 1.

The thickness of the stirring blade (the thickness in a rotation direction 3 of the tube 1) can be appropriately set according to the size of the tube 1 and the amount of the carbonized material 5 charged, and is preferably controlled so that the stirring blade has sufficient strength to avoid damage caused by the carbonized material 5 charged into the tube 1. Specifically, the thickness of the stirring blade is usually 1% or more and 100% or less, preferably 20% or more and 90% or less, more preferably 30% or more and 95% or less, with respect to the thickness of the wall of the tube 1.

The material of the stirring blade is not particularly limited as long as being the material used for the rotary kiln, and may be, for example, stainless steel.

The stirring blades arranged in this manner in the tube 1 tends to bring the carbonized material 5 and the activating gas into contact more efficiently. This tends to allow easier production of a carbonaceous material with a desired specific surface area.

As shown in FIG. 2, an appropriate amount of the carbonized material 5 is charged into the tube 1. When the tube 1 is rotated in the rotation direction 3, for example, the carbonized material 5 on the stirring blade A is lifted by the stirring blade A, stirred while passing over the stirring blade A in a falling direction 4 of the carbonized material, and collected between the stirring blades A and B while being activated by making contact with the activating gas. Due to the rotation of the tube 1, the carbonized material 5 is stirred while passing over the stirring blades A to F, and is activated by making contact with the activating gas efficiently and evenly. This tends to allow easier production of a carbonaceous material with a desired pore size distribution.

Use of the rotary kiln as the activation apparatus in this manner tends to allow easier production of a carbonaceous material having an iodine number of 1,300 mg/g or more and 1,800 mg/g or less, a Reactive Black 5 value of 1.0 g/L or more and 6.0 g/L or less, and a specific surface area of 1,100 m²/g or more and 1,700 m²/g or less determined by the BET method from a N₂ adsorption isotherm at -196°C.

The activation described above provides an activated product.

The method for producing a carbonaceous material may include washing and/or drying the activated product after the activation. The conditions for these steps are not particularly limited, and known conditions can be employed. Reference may also be made to the washing and drying described below.

### (Washing)

The carbonaceous material is preferably obtained through the washing the activated product obtained by the activation. The washing is more preferably carried out with water. Performing the washing tends to allow easier production of a carbonaceous material having an iodine number of 1,300 mg/g or more and 1,800 mg/g or less, a Reactive Black 5 value of 1.0 g/L or more and 6.0 g/L or less, and a specific surface area of 1,100 m²/g or more and 1,700 m²/g or less determined by the BET method from a N₂ adsorption isotherm at -196°C.

The washing temperature and time may be appropriately set to obtain the target carbonaceous material.

### (Drying)

The carbonaceous material is preferably obtained through the drying the washed product obtained by the washing.

Any known drying method such as natural drying, heat drying, or hot air drying can be used. The drying is preferably carried out under heating and/or reduced pressure. The drying under heating is preferably carried out by hot air because the product is dried evenly and stably. The drying is preferably performed until the moisture content of the carbonaceous material reaches 20.0 mass% or less, more preferably 10.0 mass% or less.

Examples of the heating method include a heating method using a stationary constant-temperature dryer, a stationary hot-air dryer, a vacuum dryer, a rotary evaporator, or an agitated dryer such as a conical dryer and a Nauta dryer. The heating may be performed at any temperature at which the carbonaceous material is cured and is not melted, preferably, for example, 40°C or more and 300°C or less.

The method for reducing the pressure can be, for example, a method using an oil pump, an oilless pump, an aspirator, or the like. The pressure in the pressure reduction method is generally 0.00001 MPa or more and 0.05 MPa or less.

The drying time varies depending on the drying temperature, but is usually about 1 minute or more and 20 hours or less.

The carbonaceous material thus obtained may be used as it is, or may optionally be subjected to particle size adjustment by crushing, pulverization, and classification, purification by additional washing using, for example, water, an organic solvent, an aqueous acid solution, or an aqueous alkali solution, and additional heat treatment for imparting durability and structure adjustment as necessary by known methods.

The carbonaceous material preferably has the particle size adjusted so that the particle size (50% particle size in a volume-based cumulative distribution, D50) is 20 µm or more and 500 µm or less. The carbonaceous material with the particle size within the above range can be suitably used for, for example, the following applications.

### [Applications]

The carbonaceous material can be suitably used for various applications for removal, adsorption, concentration, and recovery of free residual chlorine and the anionic surfactants. The applications may include a combination of removal, adsorption, concentration, and recovery as appropriate. Examples of the applications include adsorption filters, water purifier cartridges, water purifiers, packed towers, household drinking water treatment, water treatment and purification in industrial processes, and wastewater treatment.

The carbonaceous material is suitably used for removing free residual chlorine and the anionic surfactants.

### [Method for Removing Free Residual Chlorine and Anionic Surfactants]

The removal method for removing free residual chlorine and the anionic surfactants includes removing free residual chlorine and the anionic surfactants using the carbonaceous material. Free residual chlorine is removed, for example, by being decomposed on the surface of the carbonaceous material. The anionic surfactants are removed, for example, by being adsorbed onto the carbonaceous material. These removal method may include, in addition to the use of the carbonaceous material of the present embodiment as the carbonaceous material, the same methods for removal, adsorption, concentration, and recovery of free residual chlorine and the anionic surfactants as those known in the art.

### [Adsorption Filter]

The adsorption filter of the present embodiment includes the carbonaceous material of the present embodiment. The adsorption filter is preferably used for a water purifier.

The adsorption filter contains the carbonaceous material, and thus, can exhibit the removal performance for free residual chlorine and the removal performance for the anionic surfactants both at a high level. For example, when the adsorption filter is installed in a water purifier, free residual chlorine and the anionic surfactants contained in water can be effectively removed.

The adsorption filter preferably includes the carbonaceous material and a fibrous binder.

Examples of the fibrous binder include a binder that can be fibrillated to be shaped with the carbonaceous material entangled therein. Such a fibrous binder can be either synthetic or natural. Examples of the fibrous binder include acrylic fibers, polyethylene fibers, polypropylene fibers, polyacrylonitrile fibers, cellulose fibers, nylon fibers, aramid fibers, and pulp.

The fibrous binder may be used alone, or two or more of them may be used in combination. The fibrous binder is preferably polyacrylonitrile fiber and/or pulp. Use of these fibrous binders can improve the density and strength of the adsorption filter and minimize performance degradation.

The adsorption filter preferably contains the fibrous binder in an amount of 20 parts by mass or less, more preferably 10 parts by mass or less, relative to 100 parts by mass of the carbonaceous material, to achieve the removal performance for free residual chlorine and the anionic surfactants at a higher level. The lower limit is generally 0.01 parts by mass or more.

When the adsorption filter contains other functional components described later, the phrase "relative to 100 parts by mass of the carbonaceous material" regarding the filter composition may be replaced with "relative to 100 parts by mass of the total of the carbonaceous material and the other functional components."

The adsorption filter may contain other functional components as long as they do not impair the advantages of the present embodiment. Examples of the other functional components include: lead adsorbents such as titanosilicate and zeolite-based powders capable of adsorbing and removing soluble lead; ion exchange resins; chelate resins; and various adsorbents containing silver ions and/or silver compounds for imparting antibacterial properties.

Water is passed through the adsorption filter usually at a space velocity (SV) of 300/hr or more and 6,500/hr or less to avoid excessively high pressure loss. The performance of the adsorption filter can be checked by plotting the relationship between the removal rates calculated from the concentration of the removal target substances in raw water and permeate water and the ratio of the amount of water (L) passed from the start of water supply to the volume (mL) of the water purifier cartridge (cumulative permeated water amount L/mL).

### (Filtration Capability)

In the present specification, filtration capability is defined as the amount of water (L) that can pass through the adsorption filter until the removal rate of the removal target substance reaches 80%. Water passes through the filter at a space velocity (SV) of 3,000/hr.

### (Filtration Capability for Free Residual Chlorine)

Filtration capability for free residual chlorine can be measured by a free residual chlorine removal performance test performed by a testing method specified in JIS S 3201:2019 "Testing methods for household water purifiers." Specifically, test water with a free residual chlorine concentration of 2.0 ± 0.4 (mg/L) and a water temperature of 20°C ± 3°C is passed through the carbonaceous material or the adsorption filter. Using a spectrophotometer and a diethyl-p-phenylenediamine (DPD) reagent, DPD absorptiometry is performed to analyze test raw water and filtered water, and the removal rate (%) is determined from the test raw water concentration (mg/L) and the filtered water concentration (mg/L). The removal rate (%) is plotted against the cumulative water volume (L) to determine the filtration capability.
The adsorption filter of the present embodiment has high filtration capability, and the filtration capability for free residual chlorine measured in accordance with JIS S 3201:2019 is usually 17.0 L or more, preferably 20.0 L or more, and more preferably 23.0 L or more, per cm³ of the carbonaceous material.

### (Filtration Capability for Anionic Surfactants)

Filtration capability for the anionic surfactants can be measured by an anionic surfactant removal performance test performed by a testing method specified in JIS S 3201:2019 "Testing methods for household water purifiers." Specifically, test water with an anionic surfactant concentration of 0.20 ± 0.04 (mg/L) and a water temperature of 20°C ± 3°C is passed through the carbonaceous material or the adsorption filter. Test raw water and filtered water are analyzed by solid phase extraction-high performance liquid chromatography, and the removal rate (%) is determined from the test raw water concentration (mg/L) and the filtered water concentration (mg/L). The removal rate (%) is plotted against the cumulative water volume (L) to determine the filtration capability.
The adsorption filter of the present embodiment has high filtration capability, and the filtration capability for the anionic surfactants measured in accordance with JIS S 3201:2019 is usually 55.0 L or more, preferably 65.0 L or more, and more preferably 75.0 L or more, per cm³ of the carbonaceous material.

### [Water Purifier Cartridge]

The water purifier cartridge of the present embodiment includes the carbonaceous material of the present embodiment. The water purifier cartridge may have the same configuration as a known water purifier cartridge except that the carbonaceous material of the present embodiment is included. The water purifier cartridge including the carbonaceous material can efficiently remove free residual chlorine and the anionic surfactants contained in water. Thus, for example, installing the water purifier cartridge in a household water purifier allows efficient removal of various types of harmful substances specified in JIS S 3201:2019 "Testing methods for household water purifiers," in particular, free residual chlorine and the anionic surfactants.

Examples of the water purifier cartridge include a cartridge having a housing filled with the carbonaceous material and a cartridge having a housing filled with an adsorption filter. The water purifier cartridge may include a combination of a known nonwoven fabric filter, various adsorbents, a mineral additive, a ceramic filter medium, and a hollow fiber membrane in addition to the carbonaceous material or the adsorption filter of the present embodiment.

### [Apparatus]

The apparatus includes the carbonaceous material. The apparatus may have the same configuration as a known apparatus except that the carbonaceous material of the present embodiment is used as the carbonaceous material.

The function of the carbonaceous material is used by the apparatus including the carbonaceous material. The apparatus is preferably a treatment apparatus. In the present specification, the "treatment apparatus" may be any apparatus capable of removing, adsorbing, concentrating, and recovering free residual chlorine and the anionic surfactants contained in a treatment target such as wastewater, a waste liquid, and oil by using the carbonaceous material of the present embodiment. Such a treatment apparatus may perform the removal, the adsorption, the concentration, and the recovery in combination as appropriate. Examples of the treatment apparatus include an apparatus having an adsorption filter, a column, a tank or bath, a tube, a water purifier cartridge, a cylinder, and a sheet each including the carbonaceous material (they may be hereinafter referred to as "a filter including the carbonaceous material"), a packed tower, a filtration apparatus such as a water purifier, an adsorption apparatus, and a concentration apparatus. Examples of the apparatuses include, for example, domestic drinking water treatment apparatuses, water treatment and purification apparatuses used in industrial processes, and wastewater treatment apparatuses.

The apparatus includes, for example, an adsorption unit for bringing free residual chlorine and the anionic surfactants into contact with the carbonaceous material. The adsorption unit may contain an adsorbent other than the carbonaceous material of the present embodiment, as necessary. Examples of the adsorbent include activated carbon other than the carbonaceous material of the present embodiment, zeolite, silica gel, activated alumina, nonwoven fabric, and porous organic compounds.

Examples of the filtration apparatus include a water purifier, a cartridge type filtration apparatus, a membrane treatment apparatus, and an ultrafiltration membrane apparatus, each of which contains the carbonaceous material.

The treatment apparatus may include other adsorption filters together with the adsorption filter containing the carbonaceous material. Examples of the other adsorption filters include metal filters made of stainless steel, aluminum, bronze, copper, titanium, and nickel; and resin filters made of polypropylene, polyvinyl chloride, polyvinylidene chloride, polyethylene, polyamide, and fluorine-based resin.

The treatment apparatus may be a batch treatment apparatus or a continuous treatment apparatus, and the carbonaceous material can be used in either apparatus.

### [Water Purifier]

The water purifier of the present embodiment includes the carbonaceous material of the present embodiment.

The water purifier is manufactured using the carbonaceous material or an adsorption filter. The water purifier including the adsorption filter can achieve the removal performance for free residual chlorine and the removal performance for the anionic surfactants both at a high level. Thus, the water purifier can be suitably used as a water purifier attached to a faucet or used in a kitchen.

The water purifier includes a water purification cartridge, and the water purification cartridge preferably includes the carbonaceous material or adsorption filter of the present embodiment. The water purification cartridge may be configured in the same manner as the water purifier cartridge described above.

### (Water Purification Method)

There are no particular limitations on a water purification method, but a method using the water purifier of the present embodiment is preferred. Any known water purification method can be employed.

### [Water Purification Facility]

The water purification facility of the present embodiment includes the carbonaceous material of the present embodiment. The water purification facility including the carbonaceous material can exhibit the removal performance for free residual chlorine and the removal performance for the anionic surfactants both at a high level.

Examples of the water purification facility include water purification facilities such as pure water production systems, ultrapure water production systems, and water treatment plants, wastewater treatment facilities for general industrial use, and water purification facilities for pharmaceutical and food applications.

### EXAMPLES

The present invention will be described in more detail with reference to examples and comparative examples, but the present invention is not limited to the examples.

### [Evaluation Method]

### (1) Iodine number (Iodine Adsorption Performance)

The iodine number (mg/g) of the carbonaceous material was measured and calculated.

Specifically, the iodine number was measured in accordance with JIS K 1474 (2014). First, according to JIS Z 8801-1, the carbonaceous material was pulverized until 90% or more of the carbonaceous material passed through a 45 µm mesh sieve, and then dried in a constant-temperature drier (DVS402 (trade name) manufactured by Yamato Scientific Co., Ltd.) at 115°C for 3 hours. Then, the dried product was allowed to cool to room temperature in a desiccator using silica gel as a drying agent to obtain a cooled carbonaceous material.

An iodine solution was prepared by dissolving 25.0 g of potassium iodide (manufactured by FUJIFILM Wako Pure Chemical Corporation) and 13.0 g of iodine (manufactured by FUJIFILM Wako Pure Chemical Corporation) in approximately 1 L of distilled water. The iodine solution was titrated with a 0.1 mol/L sodium thiosulfate solution (manufactured by FUJIFILM Wako Pure Chemical Corporation), and distilled water was appropriately added to the iodine solution to prepare a 0.05 mol/L iodine solution.

Thereafter, an arbitrary amount of the cooled carbonaceous material (an amount at which a residual iodine concentration in a supernatant of a filtrate described later was about 2.5 g/L) was weighed and placed in a 100 mL stoppered Erlenmeyer flask, and 50 mL of the 0.05 mol/L iodine solution was added with a volumetric pipette. The resulting mixture was shaken at 200 times/min for 15 minutes using a shaker (a medium-sized reciprocating shaker NR-10 (trade name) manufactured by TAITEC CORPORATION) at room temperature (20°C or higher and 30°C or lower) to cause the carbonaceous material to adsorb iodine. Thus, a mixed solution was obtained. The mixed solution was filtered with a mixed cellulose ester membrane filter (A045A025A (trade name) manufactured by TOYO ROSHI KAISHA, LTD.) to obtain a filtrate. Ten mL of a supernatant of the filtrate was collected with a volumetric pipette and titrated with a 0.1 mol/L sodium thiosulfate solution (manufactured by FUJIFILM Wako Pure Chemical Corporation, factor: 1.000), and the residual iodine concentration was calculated by the following equation (I). 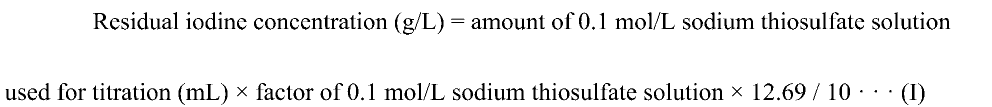 Residual iodine concentration (g/L) = amount of 0.1 mol/L sodium thiosulfate solution used for titration (mL) × factor of 0.1 mol/L sodium thiosulfate solution × 12.69 / 10 · · · (I)

The iodine number per g of the carbonaceous material was calculated by the following equation (II). 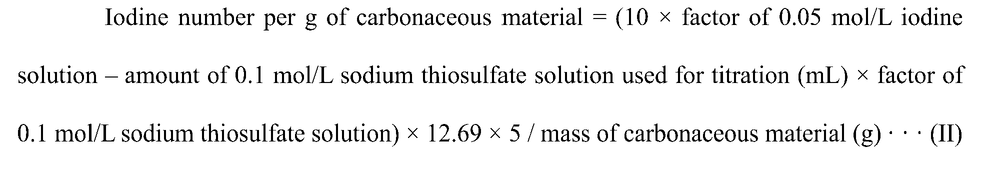 Iodine number per g of carbonaceous material = (10 × factor of 0.05 mol/L iodine solution - amount of 0.1 mol/L sodium thiosulfate solution used for titration (mL) × factor of 0.1 mol/L sodium thiosulfate solution) × 12.69 × 5 / mass of carbonaceous material (g) · · · (II)

The factor of the 0.05 mol/L iodine solution was calculated by the equation (III). 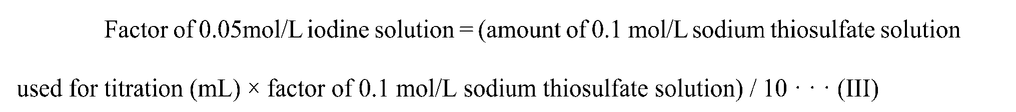 Factor of 0.05mol/L iodine solution = (amount of 0.1 mol/L sodium thiosulfate solution used for titration (mL) × factor of 0.1 mol/L sodium thiosulfate solution) / 10 · · · (III)

From the Freundlich equation, an adsorption isotherm was prepared with the residual iodine concentration on the horizontal axis and the iodine number per g of the carbonaceous material on the vertical axis, and the iodine number (mg/g) per g of the carbonaceous material at a residual iodine concentration of 2.5 g/L was calculated. The obtained iodine number was defined as the iodine adsorption performance.

### (2) Reactive Black 5 Value

The Reactive Black 5 value (g/L) of the carbonaceous material was measured.

Specifically, first, the carbonaceous material was pulverized so that the 50% particle size (D50) in the volume-based cumulative distribution was about 10.0 µm or less, and dried in a constant-temperature drier (DVS402 (trade name) manufactured by Yamato Scientific Co., Ltd.) at 115°C for 3 hours. Then, the dried product was allowed to cool to room temperature in a desiccator using silica gel as a drying agent to obtain a cooled carbonaceous material.

A test solution A containing a phosphate buffer and Reactive Black 5 (manufactured by Sigma-Aldrich) was prepared in the following manner. Specifically, first, 7.26 g of potassium dihydrogen phosphate (manufactured by FUJIFILM Wako Pure Chemical Corporation) and 28.66 g of disodium hydrogen phosphate dodecahydrate (manufactured by FUJIFILM Wako Pure Chemical Corporation) were dissolved in 2 L of distilled water to prepare a phosphate buffer (pH: 7.0). Thereafter, Reactive Black 5 was added in an amount of about 0.5 g to 1.2 g to 1 L of the resulting phosphate buffer to prepare the test solution A. In this case, the amount of Reactive Black 5 was controlled as follows. Specifically, the amount of Reactive Black 5 added to 1 L of the phosphate buffer was appropriately controlled so that the absorbance of the resulting test solution A diluted 20-fold with distilled water was 1.18 or more and 1.23 or less. The absorbance was measured at a wavelength of 594 nm using a glass cell with an optical path length of 10 mm and an ultraviolet and visible spectrophotometer (double-beam spectrophotometer U-2910 (trade name) manufactured by Hitachi High-Tech Corporation). The 20-fold diluted solution of the test solution A obtained as described above was used as a test solution B for the following absorbance measurement.

Next, an arbitrary mass of the cooled carbonaceous material was taken (a mass at which the residual ratio of Reactive Black 5 in the filtrate was about 10% according to the following equation (V)) in a 100 mL stoppered Erlenmeyer flask, the carbonaceous material was added to 50 mL of the test solution A prepared above, and the mixture was shaken in water in a shaking thermostatic bath (water bath shaker MM-10 (trade name) manufactured by TAITEC CORPORATION) at a rate of 150 times/min and 40°C for 5 hours to obtain a mixed solution. The mixed solution was then filtered with a membrane filter (DISMIC (registered trademark) 25HP045AN (trade name) manufactured by TOYO ROSHI KAISHA, LTD.) to obtain a filtrate.

The absorbance of the test solution B and the filtrate was measured at a wavelength of 594 nm using a glass cell having an optical path length of 10 mm and an ultraviolet and visible spectrophotometer (double-beam spectrophotometer U-2910 (trade name) manufactured by Hitachi High-Tech Corporation). Using these absorbances, the adsorption amount of Reactive Black 5 per g of the carbonaceous material (hereinafter, simply referred to as "RB5 adsorption amount per g of carbonaceous material (/g)") was calculated by the following equation (IV). 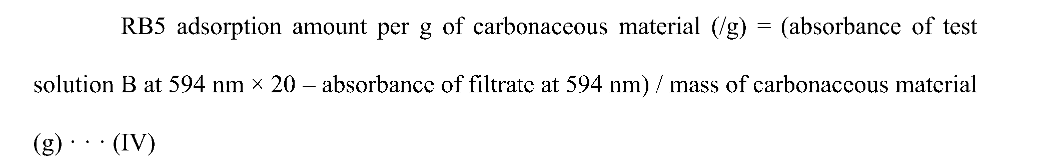 RB5 adsorption amount per g of carbonaceous material (/g) = (absorbance of test solution B at 594 nm × 20 - absorbance of filtrate at 594 nm) / mass of carbonaceous material (g) · · · (IV)

The residual ratio of Reactive Black 5 in the filtrate (hereinafter, simply referred to as "RB5 residual ratio (%)") was calculated by the following equation (V). 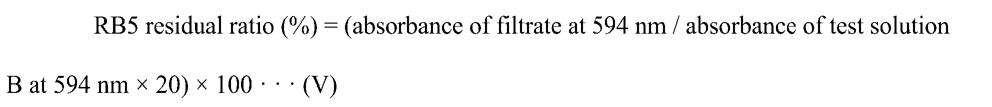 RB5 residual ratio (%) = (absorbance of filtrate at 594 nm / absorbance of test solution B at 594 nm × 20) × 100 · · · (V)

Next, a power approximation curve was created with the RB5 residual ratio (%) on the horizontal axis and the RB5 adsorption amount per g of the carbonaceous material (/g) on the vertical axis. The adsorption amount of Reactive Black 5 when the Reactive Black 5 residual ratio was 1% (hereinafter, simply referred to as "RB5 adsorption amount (/g) at 1% RB5 residual ratio") was determined using the power-law approximation equation, and the Reactive Black 5 value (g/L) was calculated by the equation (VI). 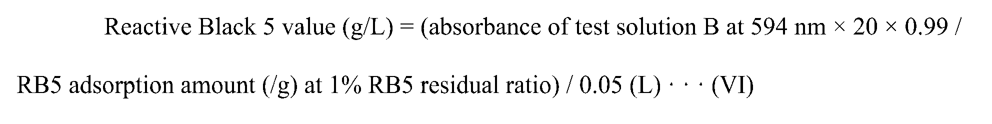 Reactive Black 5 value (g/L) = (absorbance of test solution B at 594 nm × 20 × 0.99 / RB5 adsorption amount (/g) at 1% RB5 residual ratio) / 0.05 (L) · · · (VI)

In the equation (VI), 0.05 (L) is the amount of the test solution.

### (3) BET Specific Surface Area

The specific surface area (m²/g) of the carbonaceous material determined by the BET method from the N₂ adsorption isotherm at -196°C was measured.

Specifically, the BET specific surface area (m²/g) was determined as follows. First, using a specific surface area/pore size distribution analyzer (BELSORP (registered trademark)-mini II (trade name) manufactured by MicrotracBEL Corp.), the carbonaceous material was heated at 250°C for 3 hours under reduced pressure (degree of vacuum: 0.1 kPa or less), and then a nitrogen gas adsorption isotherm of the carbonaceous material at -196°C was measured. BET analysis was performed on the obtained nitrogen adsorption isotherm to obtain a straight line with a relative pressure P / P0 of 0.01 or more and 0.10 or less by a multi-point method, and the BET specific surface area was calculated from the straight line.

### (4) Mesopore Ratio

### • Determination of Nitrogen Gas Adsorption Isotherm with BELSORP-MAX

A specific surface area/pore size distribution analyzer (BELSORP (registered trademark)-MAX (trade name) manufactured by MicrotracBEL Corp.) was used to heat the carbonaceous material under vacuum at 300°C for 3 hours, and then a nitrogen adsorption isotherm was measured at a temperature of 77K.

### • Determination of Pore Volume of Pores with Pore Size of 1.00 nm or less

The pore volume (cm³/g) of the micropores with a pore size of 1.00 nm or less per g of the carbonaceous material was calculated from the nitrogen gas adsorption isotherm by the QSDFT method in the following manner. Specifically, the pore size distribution was calculated by using the values of the nitrogen adsorption isotherm obtained in the above section "Determination of Nitrogen Gas Adsorption Isotherm with BELSORP-MAX" and applying N₂ at 77K carbon [slit pore / cyl. pore (QSDFT Ads. model)] as a calculation model, and thus the pore volume (cm³/g) of the micropores with a pore size of 1.00 nm or less was calculated.

### • Determination of Mesopore Volume

The pore volume (cm³/g) of the mesopores of the carbonaceous material was determined by the BJH method from the N₂ adsorption isotherm at -196°C. Specifically, a curve with the relative pressure P / P0 of 0.385 or more and 0.99 or less was obtained by BJH analysis using the nitrogen gas adsorption isotherm used in the determination of the BET specific surface area. From the obtained curve, the cumulative pore volume for each pore size was calculated, and the pore volume of mesopores with a pore size of 2.0 nm or more and 50.0 nm or less was calculated by subtracting the cumulative pore volume up to the pore size of 2.0 nm from the cumulative pore volume up to the pore size of 50.0 nm.

### • Calculation of Mesopore Ratio

The mesopore ratio of the carbonaceous material was calculated.

Specifically, using the pore volume (cm³/g) of the pores with a pore size of 1.00 nm or less (A) and the pore volume (cm³/g) of the mesopores (B), the mesopore ratio (A/B) of the carbonaceous material was calculated from the following equation (VII). 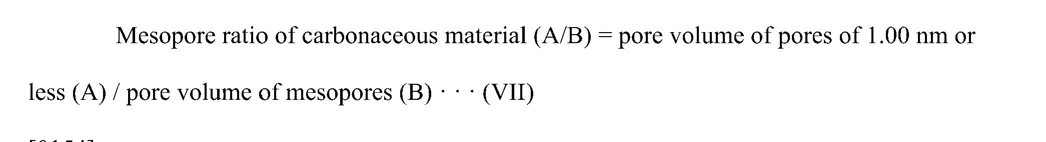 Mesopore ratio of carbonaceous material (A/B) = pore volume of pores of 1.00 nm or less (A) / pore volume of mesopores (B) · · · (VII)

### (5) Percentage of Mesopores

### • BJH specific surface area

The specific surface area (m²/g) of the carbonaceous material was determined by the BJH method from the N₂ adsorption isotherm at -196°C. The BJH specific surface area is a specific surface area determined from the pore volume and pore size of the carbonaceous material calculated based on the BJH method.

Specifically, the nitrogen adsorption isotherm used in the calculation of the BET specific surface area was used, and a curve with the relative pressure P / P0 of 0.385 or more and 0.99 or less was obtained by BJH analysis. From the obtained curve, the mesopore volume was calculated for each pore size of 2.0 nm to 50.0 nm, and the specific surface area was calculated using these values and the following equation (VIII). The BJH specific surface area of the carbonaceous material was calculated by adding the obtained specific surface areas for each pore size. $Ap = 2 \times Vp / \left(rp\times {10}^{7}\right) \times 0.0001$ (VIII)

In the equation (VIII), Ap represents a specific surface area (m²/g) at a certain pore size, Vp represents a pore volume (cm³/g) at a certain pore size, and rp represents the pore size (nm).

### • Calculation of Percentage of Mesopores

The percentage (%) of mesopores in the carbonaceous material was calculated.

Specifically, the percentage (%) of mesopores in the carbonaceous material was calculated from the following equation (IX) using the obtained BET specific surface area (m²/g) and BJH specific surface area (m²/g). $Percentage of mesopores = BJH specific surface area / BET specific surface area \times 100$ (IX)

### (6) Mesopore Volume

The mesopore volume (cm³/g) of the carbonaceous material determined by the BJH method from the N₂ adsorption isotherm at -196°C was measured and calculated in the above section "Determination of Mesopore Volume."

### (7) Total Pore Volume

The total pore volume (cm³/g) of the carbonaceous material was determined by the BJH method from the N₂ adsorption isotherm at -196°C. Specifically, the nitrogen adsorption isotherm used in the calculation of the BET specific surface area was used, and a curve with the relative pressure P / P0 of 0.385 or more and 0.99 or less was obtained by BJH analysis. From the obtained curve, the cumulative pore volume of pores with the pore size of 1.2 nm or more and 97.4 nm or less was calculated, and the obtained value was defined as the total pore volume of the carbonaceous material.

### (8) Tapped Bulk Density

The tapped bulk density (g/mL) of the carbonaceous material was measured by the tapping method.

Specifically, first, the carbonaceous material was dried in a constant-temperature drier (DVS402 (trade name) manufactured by Yamato Scientific Co., Ltd.) at 115°C for 3 hours. Then, the dried product was allowed to cool to room temperature in a desiccator using silica gel as a drying agent to obtain a cooled carbonaceous material.

After cooling, 5.0 g of the carbonaceous material was weighed and divided into approximately three equal portions, and one of the portions (about 1/3) of the carbonaceous material was placed in a 150 mL graduated cylinder (internal diameter: 31mm, Tsutsui Scientific Instruments Co., Ltd.). The graduated cylinder with a rubber stopper attached was set in an automatic tapping machine (a powder volume loss measuring instrument TPM-3A (trade name) manufactured by Tsutsui Scientific Instruments Co., Ltd.), and the cylinder was tapped from the height of 45 mm at 35 to 36 shakes/min for 1 minute. After the tapping was completed, the other one (about 1/3) of the previously divided three equal portions of the carbonaceous material was added to the graduated cylinder, the rubber stopper was attached, and the tapping was performed under the same conditions as described above for 1 minute. Thereafter, the last portion (about 1/3) of the previously divided three equal portions of the carbonaceous material was added to the graduated cylinder, the rubber stopper was attached, and the tapping was performed under the same conditions as described above for 30 minutes.

After the tapping was completed, the rubber stopper was removed, the top surface of the sample in the graduated cylinder was flattened with a spatula or any other suitable tool, and the volume (mL) of the sample was visually measured from the scale on the graduated cylinder. The measured sample volume was used to calculate the packing density measured by the tapping method according to the following equation (X). 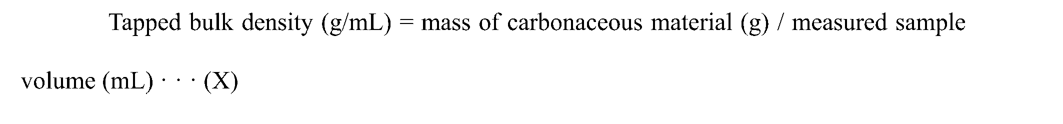 Tapped bulk density (g/mL) = mass of carbonaceous material (g) / measured sample volume (mL) · · · (X)

### (9) Filtration Capability for Free Residual Chlorine

The free residual chlorine filtration capability (L/cm³) of the carbonaceous material was measured under the test conditions for a free residual chlorine filtration capability test specified in JIS S 3201:2019 "Testing methods for household water purifiers."

The filtration capability test was performed at a filtration flow rate of 3.0 L/min with a Duracon (registered trademark) (polyacetal) downflow column (an in-house designed and machined product, inside diameter: 50 mm, height: 60 mm) filled with 50 cm³ of the carbonaceous material.

### (10) Filtration Capability for Anionic Surfactant

The anionic surfactant filtration capability (L/cm³) of the carbonaceous material was measured under the test conditions for an anionic surfactant filtration capability test specified in JIS S 3201:2019 "Testing methods for household water purifiers."

The filtration capability test was performed at a filtration flow rate of 3.0 L/min with a Duracon (registered trademark) (polyacetal) downflow column (an in-house designed and machined product, inside diameter: 50 mm, height: 60 mm) filled with 50 cm³ of the carbonaceous material.

### [Example 1]

### (Carbonization)

Coconut shells from the Philippines were carbonized at a temperature of 600°C for about 2 hours to obtain a carbonized material.

### (Activation Treatment)

The obtained carbonized material was placed in a rotary kiln as shown in FIGS. 1 and 2 having stirring blades in a furnace heated to 900°C in an amount of about 0.06 times the volume of 1 m³ of the rotary kiln. Thereafter, a gas (water vapor: 30.0 vol%, oxygen concentration: 2.5 vol%, nitrogen concentration: 67.5 vol%) was introduced into the kiln rotating at a rotation speed of 3.0 rpm to perform an activation treatment for 260 minutes to obtain an activated product.

The rotary kiln had six stirring blades arranged at 60° intervals around the center axis of the tube. Each stirring blade had a height of 15% or more and 25% or less of the inner radius of the tube, and a thickness of 40% or more and 80% or less of the thickness of the tube.

### (Washing, Drying, and Other Steps)

The obtained activated product was sufficiently washed with water and dried to obtain a dried product. Thereafter, the obtained dried product was pulverized, and adjusted to have a particle size (50% particle size in a volume-based cumulative distribution, D50) of 210 µm using a 140 mesh sieve (aperture size: 106 µm, Tokyo Screen Co., Ltd.) and a 60 mesh sieve (aperture size: 233 µm, Tokyo Screen Co., Ltd.) in accordance with JIS Z 8801-1:2019 "Test sieves of metal wire cloth." Thus, a pulverized carbonaceous material 1 as activated carbon was obtained.

### [Example 2]

A pulverized carbonaceous material 2 as activated carbon was obtained in the same manner as in Example 1 except that the activation treatment in the activation was performed for 390 minutes.

### [Example 3]

A pulverized carbonaceous material 3 as activated carbon was obtained in the same manner as in Example 1 except that the activation treatment in the activation was performed for 420 minutes.

### [Comparative Example 1]

### (Carbonization)

Coconut shells from the Philippines were carbonized at a temperature of 600°C for about 2 hours to obtain a carbonized material.

### (Activation Treatment)

The obtained carbonized material was placed in a rotary kiln as shown in FIGS. 1 and 2 having stirring blades in a furnace heated to 900°C in an amount of about 0.06 times the volume of 1 m³ of the rotary kiln. Thereafter, a gas (water vapor: 40.0 vol%, oxygen: 5.0 vol%, nitrogen: 55.0 vol%) was introduced into the kiln rotating at a rotation speed of 3.0 rpm to perform an activation treatment for 130 minutes to obtain an activated product.

The rotary kiln had six stirring blades arranged at 60° intervals around the center axis of the tube. Each stirring blade had a height of 15% or more and 25% or less of the inner radius of the tube, and a thickness of 40% or more and 80% or less of the thickness of the tube.

### (Washing, Drying, and Other Steps)

The obtained activated product was sufficiently washed with water and dried to obtain a dried product. Thereafter, the obtained dried product was pulverized, and adjusted to have a particle size (50% particle size in a volume-based cumulative distribution, D50) of 210 µm using a 140 mesh sieve (aperture size: 106 µm, Tokyo Screen Co., Ltd.) and a 60 mesh sieve (aperture size: 233 µm, Tokyo Screen Co., Ltd.) in accordance with JIS Z 8801-1:2019 "Test sieves of metal wire cloth." Thus, a pulverized carbonaceous material 4 as activated carbon was obtained.

### [Comparative Example 2]

A pulverized carbonaceous material 5 as activated carbon was obtained in the same manner as in Comparative Example 1 except that the activation treatment in the activation was performed for 200 minutes.

### [Comparative Example 3]

A pulverized carbonaceous material 6 as activated carbon was obtained in the same manner as in Comparative Example 1 except that the activation treatment in the activation was performed for 250 minutes.

### [Comparative Example 4]

A pulverized carbonaceous material 7 as activated carbon was obtained in the same manner as in Comparative Example 1 except that the activation treatment in the activation was performed for 280 minutes.

### [Comparative Example 5]

### (Carbonization)

Coconut shells from the Philippines were carbonized at a temperature of 600°C for about 2 hours to obtain a carbonized material 1.

The obtained carbonized material 1 was pulverized to a mean particle size of 20 µm or more and 80 µm or less to obtain a pulverized product. Thereafter, 1,000 g of the obtained pulverized product, a calcium chloride aqueous solution obtained by dissolving 25 g of calcium chloride (guaranteed reagent, manufactured by FUJIFILM Wako Pure Chemical Corporation) in 57 g of water, 250 g of hard pitch (softening point: 110°C, PK-M flake (trade name) manufactured by JFE Chemical Corporation), 80 g of creosote (creosote oil (trade name: naphthalene B) manufactured by JFE Chemical Corporation), 15 g of lignin (SunEx (registered trademark) M (trade name) manufactured by Nippon Paper Industries Co., Ltd.), and 73 g of water were put into a mixer (high-speed mixer DH-5 (trade name) manufactured by Universe Co., Ltd.) and mixed together for 25 minutes to obtain a mixture. The obtained mixture was charged in an extrusion granulator (Disc Pelleter (trade name) manufactured by Fuji Paudal Co., Ltd.) with an aperture size of 4.0 mm, and extrusion-molded to obtain a granulated product. The obtained granulated product was carbonized at a temperature of 650 °C for about 30 minutes to obtain a carbonized material 2.

### (Activation Treatment)

The obtained carbonized material 2 was placed in a rotary kiln shown in FIGS. 1 and 2 having stirring blades in a furnace heated to 900°C in an amount of about 0.06 times the volume of 1m³ of the rotary kiln. Thereafter, a gas (water vapor: 40.0 vol%, oxygen: 5.0 vol%, and nitrogen: 55.0 vol%) was introduced into the kiln rotating at a rotation speed of 3.0 rpm to perform an activation treatment for 150 minutes to obtain an activated product.

The rotary kiln had six stirring blades arranged at 60° intervals around the center axis of the tube. Each stirring blade had a height of 15% or more and 25% or less of the inner radius of the tube, and a thickness of 40% or more and 80% or less of the thickness of the tube.

### (Washing, Drying, and Other Steps)

The obtained activated product was washed with diluted hydrochloric acid, sufficiently washed with water to remove residual hydrochloric acid, and dried to obtain a dried product. Thereafter, the obtained dried product was pulverized, and adjusted to have a particle size (50% particle size in a volume-based cumulative distribution, D50) of 210 µm using a 140 mesh sieve (aperture size: 106 µm, Tokyo Screen Co., Ltd.) and a 60 mesh sieve (aperture size: 233 µm, Tokyo Screen Co., Ltd.) in accordance with JIS Z 8801-1:2019 "Test sieves of metal wire cloth." Thus, a pulverized carbonaceous material 8 as activated carbon was obtained.

**[Table 1]**

| | Carbonaceous material | Iodine adsorption performance | Reactive Black 5 value | BET specific surface area | Mesopore ratio | Mesopore percentage | Mesopore volume | Total pore volume | Tapped bulk density | Free residual chlorine filtration capability | Anionic surfactant filtration capability |
|---|---|---|---|---|---|---|---|---|---|---|---|
| | | (mg/g) | (g/L) | (m²/g) | (-) | (%) | (cm³/g) | (cm³/g) | (g/mL) | (L/cm³) | (L/cm³) |
| Example 1 | 1 | 1350 | 3.7 | 1430 | 2.6 | 8.1 | 0.14 | 0.55 | 0.35 | 26.90 | 78.0 < |
| Example 2 | 2 | 1520 | 2.2 | 1666 | 1.8 | 11.2 | 0.20 | 0.81 | 0.35 | 26.00 | 78.0 < |
| Example 3 | 3 | 1600 | 3.9 | 1565 | 2.9 | 6.9 | 0.13 | 0.53 | 0.41 | 25.90 | 78.0 < |
| Comparative Example 1 | 4 | 980 | 25.1 | 924 | 6.9 | 4.1 | 0.04 | 0.16 | 0.57 | 10.70 | 8.4 |
| Comparative Example 2 | 5 | 1082 | 16.0 | 1055 | 5.9 | 4.7 | 0.06 | 0.22 | 0.54 | 15.70 | 17.0 |
| Comparative Example 3 | 6 | 1160 | 10.6 | 1281 | 4.6 | 5.5 | 0.08 | 0.30 | 0.51 | 21.80 | 24.5 |
| Comparative Example 4 | 7 | 1300 | 7.1 | 1222 | 4.2 | 5.8 | 0.09 | 0.30 | 0.46 | 26.90 | 54.3 |
| Comparative Example 5 | 8 | 1110 | 5.8 | 1114 | 2.1 | 9.1 | 0.15 | 0.33 | 0.45 | 20.00 | 78.0 < |

### INDUSTRIAL APPLICABILITY

The carbonaceous material of the present embodiment can be suitably used for various applications for removing, adsorbing, concentrating, and recovering free residual chlorine that can be decomposed on the surface of the carbonaceous material and anionic surfactants having relatively large molecular sizes.

The present application is based on Japanese patent application filed on November 29, 2023 (Japanese Patent Application No. 2023-201658), the contents of which are incorporated herein by reference.

### DESCRIPTION OF REFERENCE CHARACTERS

- A, B, C, D, E, F: Stirring Blade
- 1: Tube
- 2: Flow Direction of Activating Gas
- 3: Rotation Direction of Tube
- 4: Falling Direction of Carbonized material
- 5: Carbonized material.

## Claims

1. A carbonaceous material having
an iodine number of 1,300 mg/g or more and 1,800 mg/g or less,
a Reactive Black 5 value of 1.0 g/L or more and 6.0 g/L or less, and
a specific surface area of 1,100 m²/g or more and 1,700 m²/g or less determined by the BET method from a N₂ adsorption isotherm at -196°C.

2. The carbonaceous material of claim 1, wherein
a ratio (A/B) of a pore volume (A) of pores with a pore size of 1.00 nm or less per g of the carbonaceous material calculated by the QSDFT method from a nitrogen adsorption isotherm to a pore volume (B) of mesopores determined by the BJH method from the N₂ adsorption isotherm at -196°C is 1.0 or more and 4.0 or less.

3. The carbonaceous material of claim 1, wherein
a percentage of mesopores is 4.8% or more and 15.0% or less.

4. The carbonaceous material of claim 1, wherein
a pore volume of mesopores determined by the BJH method from the N₂ adsorption isotherm at -196°C is 0.06 cm³/g or more and 0.30 cm³/g or less.

5. The carbonaceous material of claim 1, wherein
a total pore volume determined by the BJH method from the N₂ adsorption isotherm at -196°C is 0.25 cm³/g or more and 1.00 cm³/g or less.

6. The carbonaceous material of claim 1, wherein
a tapped bulk density measured by the tapping method is 0.30 g/mL or more and 0.50 g/mL or less.

7. The carbonaceous material of any one of claims 1 to 6, wherein
the carbonaceous material is used for removing at least free residual chlorine and an anionic surfactant in water.

8. A method for producing the carbonaceous material of any one of claims 1 to 6, the method comprising:
carbonizing a raw material to obtain a carbonized material; and
subjecting the carbonized material to an activation treatment to obtain an activated product.

9. The method of claim 8, further comprising:
washing the activated product.

10. The method of claim 8, wherein
the raw material is coconut shells.

11. An adsorption filter comprising:
the carbonaceous material of any one of claims 1 to 6.

12. A water purifier cartridge comprising:
the carbonaceous material of any one of claims 1 to 6.

13. A water purifier comprising:
the carbonaceous material of any one of claims 1 to 6.

14. A water purification facility comprising:
the carbonaceous material of any one of claims 1 to 6.
